(19) Europäisches Patentamt European Patent Office Office européen des brevets

(11) **EP 3 776 370 B1**

(12) **EUROPEAN PATENT SPECIFICATION**

(45) Date of publication and mention of the grant of the patent:
**20.11.2024 Bulletin 2024/47**

(21) Application number: **19733401.4**

(22) Date of filing: **20.05.2019**

(51) International Patent Classification (IPC):
**G06N 3/092** (2023.01)     **G06N 3/0455** (2023.01)
**G06N 3/042** (2023.01)     **G06N 3/0442** (2023.01)
**G06N 5/043** (2023.01)     **G06N 3/008** (2023.01)

(52) Cooperative Patent Classification (CPC):
**G06N 3/042; G06N 3/0442; G06N 3/0455;**
**G06N 3/092;** G06N 3/008; G06N 5/043

(86) International application number:
**PCT/EP2019/062943**

(87) International publication number:
**WO 2019/219969 (21.11.2019 Gazette 2019/47)**

(54) **GRAPH NEURAL NETWORK SYSTEMS FOR BEHAVIOR PREDICTION AND REINFORCEMENT LEARNING IN MULTIPLE AGENT ENVIRONMENTS**

GRAPHSYSTEME MIT NEURONALEM NETZ FÜR VERHALTENSVORHERSAGE UND VERSTÄRKUNGSLERNEN IN EINER MULTI-AGENTEN-UMGEBUNG

SYSTÈMES DE RÉSEAU NEURONAL DE GRAPHE POUR LA PRÉDICTION DE COMPORTEMENT ET L'APPRENTISSAGE DE RENFORCEMENT DANS DES ENVIRONNEMENTS À AGENTS MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2018 US 201862673812 P**

(43) Date of publication of application:
**17.02.2021 Bulletin 2021/07**

(73) Proprietor: **DeepMind Technologies Limited London EC4A 3TW (GB)**

(72) Inventors:
• **SONG, Hasuk**
  **London N1C 4AG (GB)**
• **TACCHETTI, Andrea**
  **London N1C 4AG (GB)**
• **BATTAGLIA, Peter William**
  **London N1C 4AG (GB)**
• **ZAMBALDI, Vinicius**
  **London N1C 4AG (GB)**

(74) Representative: **Marks & Clerk GST**
  **1 New York Street**
  **Manchester M1 4HD (GB)**

(56) References cited:
• **THOMAS KIPF ET AL: "Neural Relational Inference for Interacting Systems", ARXIV.ORG, CORNELL UNIVERSITY LIBRARY, 201 OLIN LIBRARY CORNELL UNIVERSITY ITHACA, NY 14853, 13 February 2018 (2018-02-13), XP080856558**
• **TINGWU WANG ET AL: "NERVENET: LEARNING STRUCTURED POLICY WITH GRAPH NEURAL NETWORKS", 6TH INTERNATIONAL CONFERENCE ON LEARNING REPRESENTATIONS (ICLR 2018), 10 March 2018 (2018-03-10), Vancouver Convention Center, Vancouver, BC, Canada, pages 1 - 26, XP055604877**
• **HOANG M LE ET AL: "Coordinated Multi-Agent Imitation Learning", ARXIV.ORG, CORNELL UNIVERSITY LIBRARY, 201 OLIN LIBRARY CORNELL UNIVERSITY ITHACA, NY 14853, 9 March 2017 (2017-03-09), XP080755407**
• **RYAN LOWE ET AL: "Multi-Agent Actor-Critic for Mixed Cooperative-Competitive Environments", ARXIV.ORG, CORNELL UNIVERSITY LIBRARY, 201 OLIN LIBRARY CORNELL UNIVERSITY ITHACA, NY 14853, 7 June 2017 (2017-06-07), XP081306061**

- **PETER W BATTAGLIA ET AL: "Interaction Networks for Learning about Objects, Relations and Physics", ARXIV.ORG, CORNELL UNIVERSITY LIBRARY, 201 OLIN LIBRARY CORNELL UNIVERSITY ITHACA, NY 14853, 1 December 2016 (2016-12-01), XP080735994**
- **YEDID HOSHEN: "VAIN: Attentional Multi-agent Predictive Modeling", ARXIV.ORG, CORNELL UNIVERSITY LIBRARY, 201 OLIN LIBRARY CORNELL UNIVERSITY ITHACA, NY 14853, 19 June 2017 (2017-06-19), XP080771020**

## Description

BACKGROUND

This specification relates to neural networks for predicting the actions of, or influences on, agents in environments with multiple agents, in particular for reinforcement learning.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Some neural networks represent graph structures comprising nodes connected by edges; the graphs may be multigraphs in which nodes may be connected by multiple edges. The nodes and edges may have associated node features and edge features; these may be updated using node functions and edge functions, which may be implemented by neural networks.

Wang et al. "Nervenet: Learning Structured Policy with Graph Neural Networks", ICLR 2018, describes a reinforcement learning system for controlling an agent with a jointed body structure. The system uses a graph neural network in which nodes represent the joints and edges the physical dependencies between them; each node predicts an output action.

Kipf et al., "Neural Relational Inference for Interacting Systems", arXiv:1802.04687v1 describes an unsupervised model that learns to infer interactions between physical entities and hence can predict future trajectories. Hoang et al. "Coordinated Multi-Agent Imitation Learning", arXiv:1703.03121v1 addresses the problem of imitation learning from demonstrations of multiple coordinating agents. Lowe at el., "Multi-Agent Actor-Critic for Mixed Cooperative-Competitive Environments", arXiv:1706.02275v3 describes an actor-critic approach to multi-agent reinforcement learning in which the critic is augmented with extra information about the policies of other agents; graph neural networks are not used. Battaglia et al. "Interaction Networks for Learning about Objects, Relations and Physics", arXiv: 1612.00222v1 describes an interaction network which models a system of objects as a graph.

SUMMARY

This specification describes neural network systems and methods implemented as computer programs on one or more computers in one or more locations for processing data representing the behaviors of multiple agents, for predicting actions of the agents or for determining influences on the actions of the agents. The agents may be robots on a factory floor or autonomous or semi-autonomous vehicles. The described neural network systems are used in reinforcement learning, for example to improve performance by anticipating the actions of other agents, or for learning cooperative behavior.

The invention is defined in claim 1. Features of embodiments are defined in the dependent claims.

Thus in one aspect a relational forward model (RFM) neural network system for predicting or explaining the actions of multiple agents in a shared environment comprises an input to receive agent data representing agent actions for each of multiple agents, and one or more processors. The one or more processors are configured to implement an encoder graph neural network subsystem to process the agent data as (in conjunction with) graph data to provide encoded graph data. The graph data comprise data representing at least nodes and edges of a graph; the edges may be directed or undirected. Each of the agents may be represented by a node. Non-agent entities in the environment may also each be represented by a node. The nodes have node attributes, for example for determining the actions of each agent. The nodes may each have the set of same attributes. The graph data provided to the encoder may lack edge attributes. The edges connect the agents to each other and to the non-agent entities. The encoded graph data comprise node attributes and edge attributes representing an updated version of the graph data.

The one or more processors are further configured to implement a processing, in particular a recurrent graph neural network subsystem. The recurrent/processing graph neural network subsystem comprises a recurrent neural network to process the encoded graph data and provide processed graph data comprising an updated version of the node attributes and edge attributes of the encoded graph data. The one or more processors are further configured to implement a decoder graph neural network subsystem to decode the processed graph data and provide decoded graph data comprising an updated version of the node attributes and edge attributes of the processed graph data. The system has a system output to provide representation data comprising a representation of one or both of the node attributes and edge attributes of the decoded graph data for one or more, for example all of the agents. The representation relates to a predicted action of one or more of the agents e.g. derived respectively from the node attributes or edge attributes of the decoded graph data.

In some implementations the actions may comprise movements of the agents. Thus the agent data captured by the system may comprise agent position and motion data for each of the agents. The node attributes may then include attributes for the position and motion of each agent. In some implementations each of the agents may be connected to each of the other agents by an edge, and each of the non-agent entities may be connected to each of the agents by an edge. However in implementations non-agent entities, for example static entities, are not be connected by edges.

In some implementations the system output comprises one or more output neural network layers, for example a multilayer perceptron (MLP). The node attributes may be represented as a vector. The one or more output neural network layers may combine the node attributes for a node in the decoded graph data in order to output the representation data. The representation derived from a node may comprise a predicted action of the agent represented by the node. The representation data may define a spatial map, such as a heat map, of data derived from the node attributes of one or more nodes representing one or more of the agents. In such a map the data derived from the node attributes may be represented at a position of the respective node. For example where the actions may comprise movements of the agents the map may represent the probability of each of the agents represented being in a position.

In some implementations the representation data comprises a representation of the edge attributes of the decoded graph data for the edges connecting to one or more of the nodes. The representation of the edge attributes for an edge may be determined from a combination of the edge attributes for the edge. For example the edge attributes may be represented as a vector and the combination of edge attributes for an edge may be a vector norm such as a $p$-norm, where $p$ is an integer.

In implementations the edges are directed (although nodes may be connected by edges in two opposite directions). Thus an edge may connect from an origin node to an end node, for example from an agent or non-agent entity node to an agent node. The representation of the edge e.g. vector norm may represent the importance to or influence of the origin node on the agent node to which it connects.

The edge representation data may define a spatial map such as a heat map. In the spatial map the representation of the edge attributes for an edge, for example a vector norm of the attributes, may be located at an origin node position for the edge. Such a spatial map may be defined on a per-agent basis, that is there may be one map for each agent considered.

The hypothesis is that the representation of the edge, for example the vector norm, represents the importance of the edge. Thus the edge attributes of the decoded graph may encode information which can be used to explain the behaviour of an agent, for example by indicating which nodes influenced an action or by identifying which other node(s) are most influential to a particular agent, for example by ranking the other nodes. Changes in this explanatory information may be tracked over time.

A neural network system as described above is trained by supervised training, for example based on observations of the behaviour of the multiple agents in the shared environment.

In a neural network system as described above comprising one or more of the encoder, recurrent, and decoder graph neural network subsystems may be configured to implement graph network processing as follows: For each of the edges, process the edge features using an edge neural network to determine output edge features. For each of the nodes, aggregate the output edge features for edges connecting to the node to determine aggregated edge features for the node. For each of the nodes, process the aggregated edge features and the node features using a node neural network to determine output node features. This procedure may be performed once or multiple times iteratively. Processing the edge features may comprises, for each edge, providing the edge features and node features for the nodes connected by the edge to the edge neural network to determine the output edge features.

One or more of the encoder, recurrent, and decoder graph neural network subsystems may be further configured to determine a global feature vector using a global feature neural network. The global feature vector may represent the output edge features and the output node features. Where the encoder graph neural network subsystem determines a global feature vector the subsequent processing and decoder graph neural network subsystems may also operate on the global feature vector. A graph neural network subsystem, such as the recurrent graph neural network subsystem, may comprise a recurrent graph network. Then one or more of the edge neural network, the node neural network, and a global feature neural network (described below) may comprise a recurrent neural network, for example a GRU (Gated Recurrent Unit) neural network.

The above-described system is included in a reinforcement learning system. The reinforcement learning system may be configured to select actions to be performed by one of the agents interacting with the shared environment. The reinforcement learning system comprises an input to obtain state data representing a state of the shared environment, and reward data representing a reward received resulting from the agent performing the action. The state data may be derived, for example, by capturing one or more observations, such as images, from the environment and processing these using an observation processing neural network such as a convolutional neural network. The reinforcement learning system further comprises an action selection policy neural network to process the state data and reward data to select the actions. The action selection policy neural network is configured to receive and process the representation data to select the actions.

The observations may also be used for training the system for predicting/explaining the actions of the agents. For example the observation processing neural network or another neural network may be configured to identify the actions of the agents in the environment. The observation processing neural network or another neural network may additionally or alternatively be configured to identify the agents and/or the non-agent entities, for example for adapting the graph according to the entities present.

The reinforcement learning system may, in general, be of any type. For example it may be a policy-based system such as an Advantage Actor Critic, A2C or A3C, system (e.g. Mnih et al. 2016), which directly parameterizes a policy and value function. Alternatively it may be a Q-learning system, such as a Deep Q- learning Network (DQN) system or Double-DQN system, in which the output approximates an action-value function, and optionally a value of a state, for determining an action. In another alternative it may be a distributed reinforcement learning system such as IMPALA (Importance-Weighted Actor-Learner), Espholt et al., arXiv: 1802.01561. In a continuous control setting it may directly output an action e.g. a torque or acceleration value, for example using the DDPG (Deep Deterministic Policy Gradients) technique (arXiv 1509.02971) or a variant thereof.

In some implementations the reinforcement learning system may be configured to train the neural network system for predicting or explaining the actions of the agents from observations of the shared environment during training of the reinforcement learning system. Thus the two systems may be trained jointly. The neural network system for predicting or explaining the actions of the agents may be private to the reinforcement learning system, that is it need not rely for training on data not available to the reinforcement learning system. In some implementations the two systems may be co-located in one of the agents, and may learn alongside one another.

Optionally the graph network processing may include a self-referencing function, implemented by a neural network. For example a node update may be dependent upon the initial features of the node. Such processing may be advantages in facilitating the agent in predicting its own actions, which may enhance the information upon which the action selections are based. Optionally the neural network system for predicting or explaining the actions of the agents may be rolled out for multiple time steps to provide additional information for the reinforcement learning system. Thus the system may be used for imagination-based planning (Weber et al., arXiv: 1707.06203).

In an example, which is not part of the claimed subject-matter, there is also described a method of predicting or explaining the actions of multiple agents in a shared environment. The method may comprise receiving agent data representing actions for each of multiple agents. The method may further comprise processing the agent data in conjunction with graph data to provide encoded graph data. The graph data may comprise data representing at least nodes and edges of a graph, wherein each of the agents is represented by a node, wherein non-agent entities in the environment are each represented by a node, wherein the nodes have node attributes for determining the actions of each agent, wherein the edges connect the agents to each other and to the non-agent entities, and wherein the encoded graph data comprises node attributes and edge attributes representing an updated version of the graph data. The method may further comprise processing the encoded graph data using a recurrent graph neural network to provide processed graph data comprising an updated version of the node attributes and edge attributes of the encoded graph data. The method may further comprise decoding the processed graph data to provide decoded graph data comprising an updated version of the node attributes and edge attributes of the processed graph data. The method may further comprise outputting a representation of one or both of the node attributes and edge attributes of the decoded graph data for one or more of the agents, wherein the representation relates to a predicted or explained behaviour of the agent.

The behaviours may comprise actions of the agents. Outputting the representation may comprise processing the node attributes for a node of the decoded graph data to determine a predicted action of the agent represented by the node.

The method may be used for explaining the actions of the agents. Outputting the representation may then comprise processing the edge attributes of an edge of the decoded graph data connecting an influencing (origin) node, which may be an agent or non-agent node, to an agent node to determine data representing the importance of the influencing node to the agent node.

The method may be used in reinforcement learning. For example the reinforcement learning may learn a policy for selecting an action to be performed by an agent dependent upon the state of an environment shared by multiple agents. The reinforcement learning method may comprise predicting behaviours of the agents in the environment using the described method and then using the predicted behaviours to learn the policy.

In general implementations of the described systems may be employed with real or simulated agents. The environment is a real-world environment and the agent may be a mechanical agent such as a robot interacting with the real-world environment. In some other implementations the agents may comprise control devices operating in a manufacturing or service facility and working together to control aspects of the facility, for example the operating temperature of a server farm. Other examples are described later.

The subject matter described in this specification can be implemented in particular embodiments so as to realize one or more of the following advantages.

Some implementations of the described neural network systems are able to characterize the behavior of multiple autonomous agents, such as robots in a factory or autonomous or semi-autonomous vehicles. This information can then be used to train an agent to accomplish a task more effectively or more efficiently. For example an agent such as a mechanical agent may be trained to accomplish a task with improved performance, and/or using less data and processing resources. More particularly, training is faster and uses less data and computational resources than some other techniques, and the described systems can both predict actions and influences which enables them to learn in situations where other techniques could find it difficult, thus facilitating better performance.

The described neural network systems can also be used by an agent so that the agent may cooperate with other agents to perform a task. The other agents may or may not be of the same type; for example they may be human-controlled or computer-controlled or they may originate from different manufacturers. One example of such cooperative behavior is the control of multiple robots on a factory or warehouse floor; equipping such a robot with a neural network system of the type described herein can facilitate improved robot control because the behavior of the other robots can be taken into account. In another example an autonomous or semi-autonomous vehicle can use neural network system of the type described to predict the behavior of other road users or pedestrians and hence improve safety.

Significantly, because the described systems for predicting/explaining the actions of multiple agents require less experience to learn they can achieve good results when trained jointly with a reinforcement learning system, even whilst the other agents are still learning and their behavior is changing.

In some other applications the described neural network systems can provide information relating to the motivation or intention of an agent. That is, information derived from the edges of the processed graph can be used to determine why an agent acted in the way it did, or how it might act. This can give insight into the way an autonomous agent under control of a machine learning system is acting. This information can be useful for regulatory and other purposes since, if the motivations for the actions of an autonomous system can be discerned it is easier to trust such a system.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

BRIEF DESCRIPTION OF THE DRAWINGS

FIG 1 shows an example neural network system for predicting or explaining the actions of multiple agents in a shared physical system environment.
FIGs 2a and 2b show a graph neural network subsystem, and operation of the graph neural network subsystem.

FIG 3 shows details of a graph processing neural network system for predicting or explaining the actions of multiple agents in a shared physical system environment

FIG 4 shows a process for using the graph processing neural network system of FIG 3 to provide representation data predicting an agent action.

FIGs 5a and 5b show shows locations of agents on a grid (upper) and (lower), respectively, an example heat map of action predictions and an example heat map of agent-entity importance relationships.

FIG 6 shows an agent including a reinforcement learning system incorporating the graph processing neural network system of Figure 3.

Like reference numbers and designations in the various drawings indicate like elements.

DETAILED DESCRIPTION

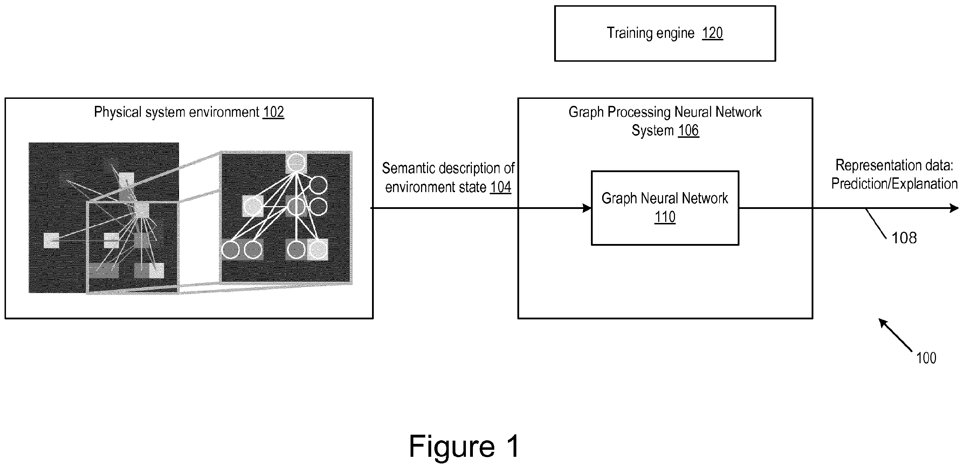

FIG. 1 shows an example neural network system 100 for predicting or explaining the actions of multiple agents in a shared physical system environment 102. The neural network system 100 is an example of a system implemented as computer programs on one or more computers in one or more locations, in which the systems, components, and techniques described below can be implemented.

The agents may include mechanical agents such as robots or vehicles in a real environment and the system predicts their behavior, e.g. for safety or control purposes. For example the neural network system 100 may be used in a robot or vehicle control system to control the behavior of the robot/vehicle in accordance with a prediction or explanation of the behavior of one or more of the other agents, which may be other robots/vehicles and/or people. The control system comprises a reinforcement learning system. An explanation of the behavior of a particular agent may comprise data defining an importance or influence of one or more other agent or non-agent entities in the environment on the particular agent. This data may similarly be used by a control system to control an agent in response to an explanation of the behavior of one or more other agents e.g. other robots/vehicles or people. Further examples are given later.

Non-agent entities in the environment may include objects to be collected, manipulated, moved and/or dropped, static objects or entities such as obstacles or markers, entities defining permitted or preferred movement or locations e.g. routes, lanes, passageways, thoroughfares, parking spaces (which may be occupied or unoccupied) and the like, entities providing instructions or control commands, e.g. signage, and so forth.

The neural network system 100 receives a semantic description of the state of the environment 104, which is formatted as a graph as explained below, and processes the data to provide an output comprising representation data for predicting and/or explaining the behavior of the agents in the environment. The neural network system 100 comprises a graph processing neural network system 106 including one or more graph neural network blocks 110 which process the input graph to provide data for an output 108, in the form of an output graph from which the representation data can be derived to predict and/or explain the behavior of the agents.

The neural network system 100 may include a training engine 120 to train the graph processing neural network system 106, as described later. An agent includes the graph processing neural network system 106 to augment observations of the environment with predictions of the behavior of the other agents.

The semantic description of the state of the environment may be a description in which data about the environment is explicit rather than inferred e.g. from observations. The semantic description of the state of the environment may include agent data and data relating to non-agent e.g. static entities. This data may include, for each agent and non-agent entity and where applicable, one or more of: position, movement e.g. a velocity vector, type (e.g. one-hot encoded), state or configuration, and (for agents) the last action taken by the agent. The semantic description of the state of the environment may also include global information such as a score or reward associated with the environment such as a score in a game or a score or reward associated with completion of one or more tasks.

The semantic description of the state of the environment is compiled into a graph data representing the state of the environment as an input graph $G_{in}^t$, in particular a directed graph. In the input graph each of the agent and non-agent entities may be represented by a node and edges may connect each agent to each other agent and to each non-agent entity (non-agent entities need not be connected). The semantic description of the state of the environment may be used to provide attributes for nodes of the input graph. The input graph may have no attributes for the edges; an agent cooperative/non-cooperative (teammate) attribute may be indicated in an edge attribute of the input graph. The output graph has edge attributes; each of these provides a representation of the effect a sender node has on a receiver node.

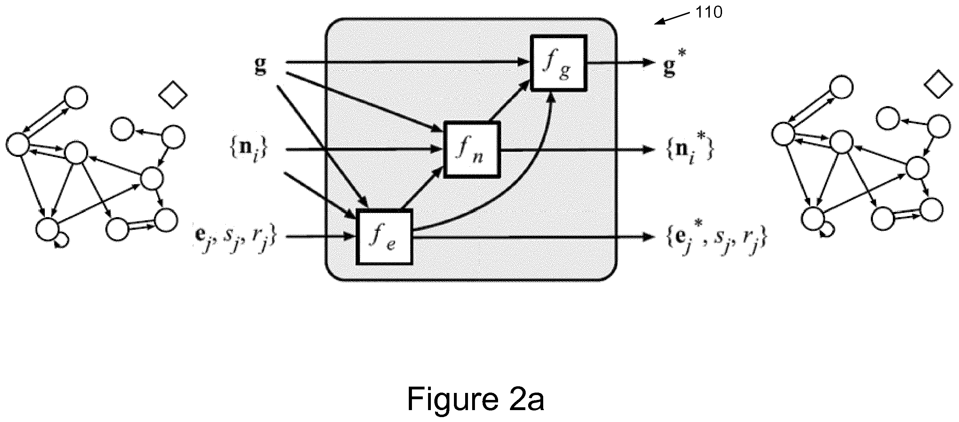

Figure 2a shows a graph neural network subsystem 110. This subsystem accepts an input directed graph G comprising a set of node features $\{n_i\}_{i=1...N_n}$ where $N_n$ is the number of nodes and each $n_i$ is a vector of node features; a set of directed edge features $\{e_j, s_j, r_j\}_{j=1...N_e}$ where $N_e$ is the number of edges and each $e_j$ is a vector of edge features and $s_j$ and $r_j$ are the indices of the sender and receiver nodes respectively; and a vector of global features $g$. For the input graph the vector of node features may be derived from the node attributes, such as agent position and velocity; where attributes are not applicable e.g. the state of a non-agent entity, they may be given a zero value. For the input graph the edges may have no attributes, and the vector of global features may represent the global score or reward where applicable.

The graph neural network subsystem 110 processes an input graph $G = (g, \{n_i\}, \{e_j, s_j, r_j\})$ to determine an output graph $G^* = \left(g^*, \{n_i^*\}, \{e_j^*, s_j, r_j\}\right)$. In general, though not necessarily, the input and output graphs may have different features.

The graph neural network subsystem 110 has three sub-functions, and edge-wise function $f_e$, a node-wise function $f_n$, and a global function $f_g$. Each of these is implemented with a different respective neural network i.e. a neural network with different parameters (weights), i.e. an edge neural network, a node neural network, and a global feature network respectively. In variants some neural networks, and/or updates as described later, may be omitted.

In some implementations each of these functions is implemented with a respective multilayer perceptron (MLP). In some implementations one or more of these functions may be implemented using a recurrent neural network. In this case (not shown) the function i.e. the recurrent neural network, takes an additional hidden graph $G_h$ as an input and additionally provides an updated hidden graph $G_h^*$ as an output. The input and hidden graphs may be combined e.g. using a GRU (Gated Recurrent Unit) style or LSTM (Long Short-Term Memory) style gating scheme. The output may be split to obtain the updated hidden graph $G_h^*$ and an output graph e.g. by copying.

In implementations the graph neural network subsystem 110 is configured to process the input graph by first applying the edge-wise function $f_e$ to update all the edges (in each specified direction), then applying the node-wise function $f_n$ to update all the nodes, and finally applying the global function $f_g$ to update the global feature vector.

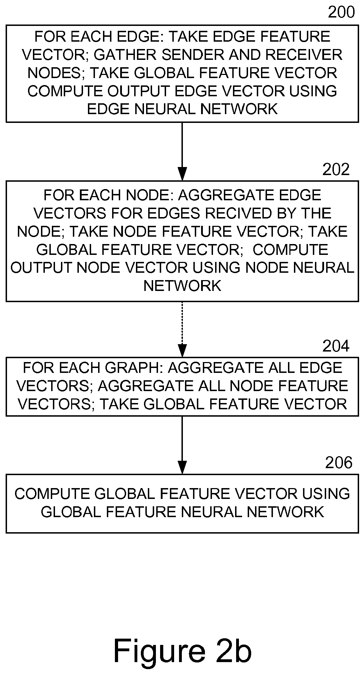

Figure 2b illustrates operation of the example graph neural network subsystem 110. At step 200 the process, for each edge $\{e_j, s_j, r_j\}$, gathers the sender and receiver node features $n_{s_j}, n_{r_j}$ as well as the edge feature vector and the global feature vector, and computes the output edge vectors, $e_j^* = f_e\left(g, n_{s_j}, n_{r_j}, e_j\right)$ using the edge neural network. Then at step 202, for each node $\{n_i\}$, the process aggregates the edge vectors for that node as receiver using an aggregation function to determine a set of aggregated edge features $\hat{e}_i$. The aggregation function should be invariant with respect to permutations of the edge vectors. For example it may comprise determination of a mean or maximum or minimum value. In some implementations the aggregation function may comprise elementwise summation e.g. $\hat{e}_i = \Sigma_j e_j^*$

for edges with $r_j = i$. Then the output node vector $\boldsymbol{n}_i^*$ is computed from the set of aggregated edge features, the current node feature vector, and the global feature vector, using the node neural network, $\boldsymbol{n}_i^* = f_n(\boldsymbol{g}, \boldsymbol{n}_i, \hat{\boldsymbol{e}}_i)$. Finally, for each graph, the process aggregates all the edge and all the node feature vectors, step 204, e.g. by element wise summation: $\hat{\boldsymbol{e}} = \Sigma_j \boldsymbol{e}_j^*, \hat{\boldsymbol{n}} = \Sigma_i \boldsymbol{n}_i^*$, and the current global feature vector $\boldsymbol{g}$, and computes the output global feature vector $\boldsymbol{g}^*$ using the global feature neural network, $\boldsymbol{g}^* = f_g(\boldsymbol{g}, \hat{\boldsymbol{n}}, \hat{\boldsymbol{e}})$.

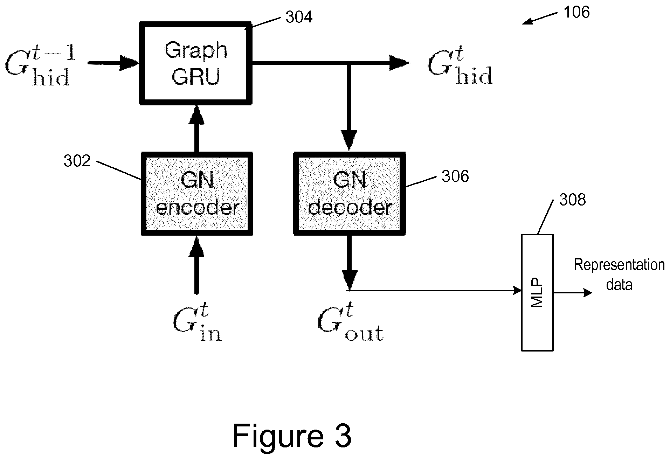

Figure 3 shows an implementation of the graph processing neural network system 106. This comprises an encoder graph neural network subsystem (GN encoder) 302 coupled to a recurrent graph neural network subsystem (e.g. Graph GRU) 304 coupled to a decoder graph neural network subsystem (GN decoder) 306. Each graph neural network subsystem may be as described with reference to Figure 2. The input graph $G_{in}^t$ at a time step $t$ is processed by the GN encoder 302 to provide encoded graph data. The encoded graph data is processed by the recurrent graph neural network subsystem 304 in conjunction with a hidden graph for the previous time step $G_{hid}^{t-1}$ to provide an updated hidden graph for the time step $G_{hid}^t$ and processed graph data, which may be referred to as a latent graph. The latent graph is decoded by the GN decoder 306 to provide an output graph for the time step $G_{out}^t$.

The representation data may be derived directly from one or more attributes of the output graph or the output graph may be further processed, e.g. by an MLP 308, to provide the representation data. For example the node attributes of each agent node of the output graph may be processed by the MLP 308, which may be a single layer "MLP", to reduce the set of node attributes to a set of output values for predicting the action of the agent. The set of output values may comprise e.g. a set of logits for available actions of the agent or may define a distribution e.g. for continuous actions. In general the graph processing neural network system 106 may be applied to discrete or continuous actions.

The graph processing neural network system 106 may be trained by training the graph neural network subsystems jointly; they may be trained based on any of the output attributes. Supervised training is used based on datasets of input-output pairs, back-propagating the gradient of any suitable loss function and using backpropagation through time to train the recurrent graph neural network subsystem. For example in one implementation gradient descent is used to minimize a cross-entropy loss between predicted and ground-truth actions of the agents, in batches of e.g. 128 episodes.

The architecture of Figure 3, which comprises three separate graph neural network subsystems, an encoder, a recurrent block, and a decoder, allows the system to perform relational reasoning on the raw input data before time recurrence is included, and then again on the output of the recurrent subsystem. This allows the recurrent graph neural network subsystem to construct memories of the relations between entities, rather than just of their current state.

In one example implementation the architecture of Figure 3 is as follows: The graph encoder neural network subsystem 302 comprises a separate 64-unit MLP with one hidden layer and ReLU activations for each of the edge, node, and global neural networks; each of the edge, node, and global neural networks of the recurrent graph neural network subsystem 304 comprises a GRU with a hidden state size of 32; the decoder neural network subsystem 306 is the same as the encoder; the aggregation functions comprise summations.

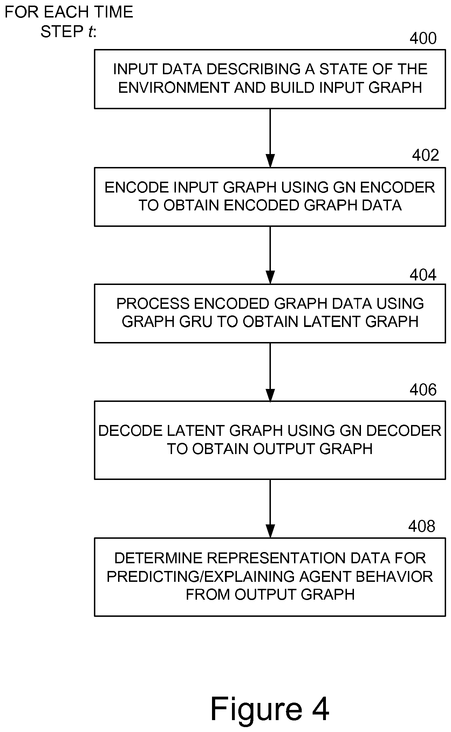

Figure 4 shows a process for using the graph processing neural network system 106 to provide representation data predicting an agent action. For each time step t the process inputs data defining a (semantic) description of the state of the environment and builds the input graph using this data (400). The process then encodes the input graph using the GN encoder 302 to provide encoded graph data (402), processes the encoded graph data with the Graph GRU 304 to provide a latent graph (404), and decodes the latent graph using the GN decoder to provide the output graph (406). The process may then determine the representation data from the output graph e.g. by processing the output graph using MLP 308 and/or as described below, to predict or explain the actions of one or more of the agents (408).

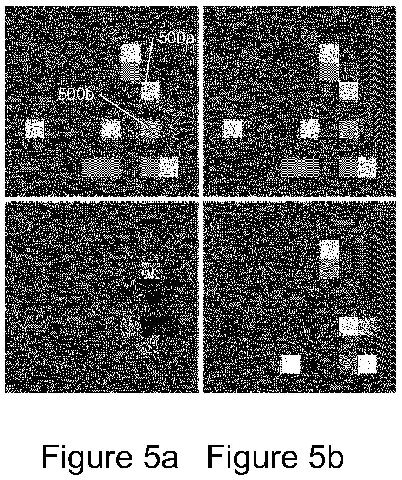

Figure 5a (lower) shows an example representation, as a heat map, of action predictions from the graph processing neural network system 106. Figure 5a (upper) shows locations of agents 500a,b on a x,y-position grid. In this example possible agent actions comprise the agent not moving and the agent moving to one of four adjacent positions on the grid (one of 5 actions). The lower figure shows, for each agent position, the probability of the agent moving to each of four adjacent positions on the grid and not moving. Each position is coded e.g. using a grayscale representation, with a prediction logit for the respective action.

Figure 5b (lower) shows an example representation, as a heat map, of agent-entity importance relationships from the graph processing neural network system 106. These relationships are usable to explain agent behavior and may be derived from the edge attributes of the output graph. For example to determine the strength of relationships between a particular agent and other entities the Euclidean norm of each edge vector connecting the node for that agent with the nodes for each of the other entities may be determined. In Figure 5b (lower) the location of each of the other entities is coded, e.g.

using a grayscale, with the strength of the relationship between the particular agent 500a and the entity (Figure 5b, upper, is the same as Figure 5a, upper). Thus this representation may indicate how influential an entity is on the particular agent.

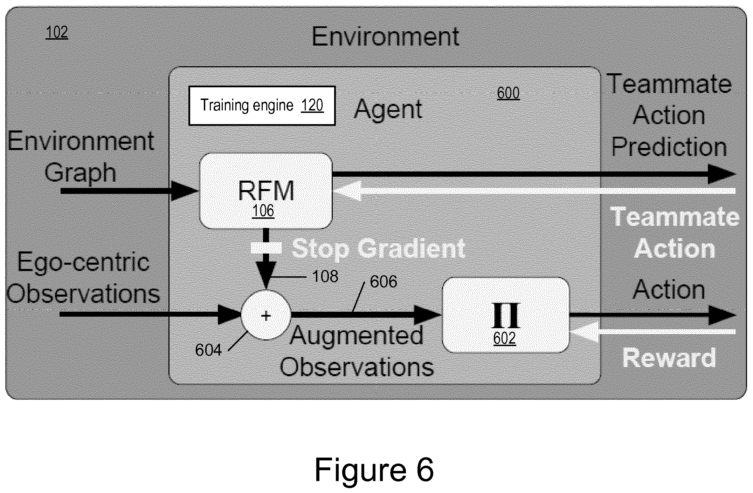

Figure 6 shows an agent 600 which is one of the agents in the shared environment 102. For example the agent 600 may be a robot or vehicle in an environment with other robots or vehicles, and optionally non-agent entities. The agent incorporates the graph processing neural network system (Relational Forward Model, RFM) 106 of Figure 3 into a reinforcement learning (RL) system, here represented as an action selection policy network (Π) 602. Some, all or none of the other agents may include a similar RL system.

In the illustrated example the RFM 106 receives the semantic description of the state of the environment e.g. in the form of an environment graph, and also receives for one or more other agents, e.g. teammates, the last action taken by the agent. This information is compiled into an input graph (pre-processing is not shown). In other implementations the agent may infer some or all of this information from observations of the environment.

The agent also receives observations, e.g. egocentric observations of the environment for the reinforcement learning system. The observations may comprise still or moving images, and/or any form of sensor data, and/or any other data characterizing the current state of the environment. The RL system also receives reward data e.g. defining a numeric value, from the environment relating to rewards received by the agent for performing actions. The representation data output 108 from the RFM 106 is provided to the RL system, and is combined with the observations of the environment by a combiner 604 to provide augmented observations 606.

The representation data may comprise a prediction of the actions of one or more of the other agents, for example in the form of a heat map as shown in Figure 5a (lower). When both the observations and the heat map (or other representation) are represented egocentrically the action predictions may comprise an additional image plane attached to the observation. Each other agent may have a separate additional image plane, or the data in the image planes may be combined into a single additional image plane.

The representation data may also or instead comprise a representation of the salience of some or all of the other entities to actions of the agent (or to actions of other agents) for example in the form of a heat map as shown in Figure 5b (lower). The other entities may be agents and/or non-agent entities. When both the observations and the heat map (or other representation) are represented egocentrically the influences of other entities on the agent, or of the other entities on other agents, may similarly comprise an additional image plane attached to the observation.

The reinforcement learning system processes the augmented observations and reward data and selects actions to be performed by the agent in order to perform a task. The task may be implicitly defined by the reward data. The actions may be selected from a discrete set of actions or may be continuous control actions; examples of tasks and actions are given later. In general actions are selected using the action selection policy network 602; this may output Q-values for selecting actions, or it may define a distribution for selecting actions, or may it directly output an action. The action selection policy network 602 may be trained using any appropriate reinforcement learning technique, for example, a Q-learning technique or an actor-critic technique.

In more detail, in one example, an action selection output of the action selection policy network 602 may include a respective numerical probability value for each action in a set of possible actions that can be performed by the agent. The RL system can select the action to be performed by the agent, e.g., by sampling an action in accordance with the probability values for the actions, or by selecting the action with the highest probability value.

In another example, the action selection output may directly define the action to be performed by the agent, e.g., by defining the values of torques that should be applied to the joints of a robotic agent or the values of accelerations to be applied to a robot or vehicle drive.

In another example, the action selection output may include a respective Q-value for each action in the set of possible actions that can be performed by the agent. The RL system can process the Q-values (e.g., using a soft-max function) to generate a respective probability value for each possible action, which can be used to select the action to be performed by the agent. The RL system may also select the action with the highest Q-value as the action to be performed by the agent. The Q value for an action is an estimate of a return that would result from the agent performing the action in response to the current observation and thereafter selecting future actions performed by the agent in accordance with the current values of the action selection policy network parameters. Here a return refers to a cumulative measure of reward received by the agent, for example, a time-discounted sum of rewards.

In some cases, the RL system can select the action to be performed by the agent in accordance with an exploration policy. For example, the exploration policy may be an $\varepsilon$-greedy exploration policy, where the RL system selects the action to be performed by the agent in accordance with the action selection output with probability 1 - $\varepsilon$, and selects the action to be performed by the agent randomly with probability $\varepsilon$. In this example, $\varepsilon$ is a scalar value between 0 and 1.

In implementations the training engine 120 may train both the RFM 106 and the RL system. They may be trained jointly, that is the agent 600 may have a private RFM 106 which is trained alongside the action selection policy network 602. The RFM 106 is trained using supervised learning as previously described, e.g. with predicted-action observed-action pairs. As indicated in Figure 6, in implementations gradients are not backpropagated through the RL system into the RFM 106.

In one implementation, the training engine 120 trains the action selection policy network 602 using an actor-critic technique. In this implementation, the action selection policy network 602 is configured to generate a value estimate in addition to an action selection output. The value estimate represents an estimate of a return e.g. a time-discounted return that would result, given the current state of the environment, from selecting future actions performed by the agent in accordance with the current values of the action selection network parameters. The training engine may train the action selection policy network using gradients of a reinforcement learning objective function $\mathcal{L}_{RL}$ given by:

$$\mathcal{L}_{RL} = \mathcal{L}_\pi + \alpha \mathcal{L}_V + \beta \mathcal{L}_H$$

$$\mathcal{L}_\pi = -\mathbb{E}_{s_t \sim \pi}\left[\hat{R}_t\right]$$

$$\mathcal{L}_V = \mathbb{E}_{s_t \sim \pi}\left[\left(\hat{R}_t - V(s_t, \theta)\right)^2\right]$$

$$\mathcal{L}_H = -\mathbb{E}_{s_t \sim \pi}\left[H\big(\pi(\cdot \,|s_t, \theta)\big)\right]$$

where $\alpha$ and $\beta$ are positive constant values, $\mathbb{E}_{s_t \sim \pi}[\cdot]$ refers to the expected value with respect to the current action selection policy (i.e., defined by the current values of the action selection policy network parameters $\theta$), $V(s_t, \theta)$ refers to the value estimate generated by the action selection policy network for observation $s_t$, $H(\pi(\cdot \,|s_t, \theta))$ is a regularization term that refers to the entropy of the probability distribution over possible actions generated by the action selection network for observation $s_t$, and $\hat{R}_t$ refers to the n-step look-ahead return, e.g., given by:

$$\hat{R}_t = \sum_{i=1}^{n-1} \gamma^i r_{t+i} + \gamma^n V(s_{t+n}, \theta)$$

where $\gamma$ is a discount factor between 0 and 1, $r_{t+i}$ is the reward received at time step $t + i$, and $V(s_{t+n}, 0)$ refers to the value estimate at time step $t + n$.

In general entities in the environment may be natural or man-made and the environment is a real-world environment. Agents may comprise computer-controlled or human-controlled machines such robots or autonomous land, sea, or air vehicles.

Agents may further comprise static or mobile software agents i.e. computer programs configured to operate autonomously and/or with other software agents or people to perform a task such as configuration or maintenance of a computer or communications network or configuration or maintenance of a manufacturing plant or data center/server farm.

For example some implementations of the system may be used for prediction or control or vehicular or pedestrian traffic e.g. for traffic signal control to reduce congestion, or for prediction or control of teams of people performing a task or playing a game e.g by providing signals to the people based on an output e.g. representation data from the system. In some other implementations the system may be used for cooperative control of robots performing a task such as warehouse or logistics automation, package delivery control e.g. using robots, drone fleet control and so forth.

Any autonomous or semi-autonomous agent of the type previously described may include the reinforcement learning system operating in conjunction with the RFM system to control the agent or to facilitate cooperative behavior in complex environments. In some implementations the agents may be of different types. For example in a warehouse setting autonomous vehicles or warehouse control robots from more than one different manufacturer may be operating. In such a case equipping each of these robots/vehicles with a combination of a reinforcement learning system and the RFM system allows the different entities to learn to work together. Similar benefits can be obtained with other types of agents.

Non-agent entities may comprise any non-agent objects in the environments of the above-described agents.

In some still further applications for an agent of the type shown in Figure 6, in which the Relational Forward Model is combined into a reinforcement learning system, the environment is a real-world environment and the agent is an electromechanical agent interacting with the real-world environment. For example, the agent may be a robot or other static or moving machine interacting with the environment to accomplish a specific task, e.g., to locate an object of interest in the environment or to move an object of interest to a specified location in the environment or to navigate to a specified destination in the environment; or the agent may be an autonomous or semi-autonomous land or air or sea vehicle navigating through the environment.

In these implementations, the observations may include, for example, one or more of images, object position data, and sensor data to capture observations as the agent interacts with the environment, for example sensor data from an image, distance, or position sensor or from an actuator. In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations. For example in the case of a robot the observations may include data characterizing the current state of the robot, e.g., one or more of: joint position, joint velocity, joint force, torque or acceleration, and global or relative pose of a part of the robot such as an arm and/or of an item held by the robot. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In these implementations, the actions may be control inputs to control the robot, e.g., torques for the joints of the robot or higher-level control commands; or to control the autonomous or semi-autonomous land or air or sea vehicle, e.g., torques to the control surface or other control elements of the vehicle or higher-level control commands; or e.g. motor control data. In other words, the actions can include for example, position, velocity, or force/torque/acceleration data for one or more joints of a robot or parts of another mechanical agent. Action data may include data for these actions and/or electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation e.g. steering, and movement e.g braking and/or acceleration of the vehicle. A simulated environment can be useful for training a reinforcement learning system before using the system in the real world.

In the case of an electronic agent the observations may include data from one or more sensors monitoring part of a plant or service facility such as current, voltage, power, temperature and other sensors and/or electronic signals representing the functioning of electronic and/or mechanical items of equipment. In some applications the agent may control actions in a real-world environment including items of equipment, for example in a facility such as: a data center, server farm, or grid mains power or water distribution system, or in a manufacturing plant or service facility. The observations may then relate to operation of the plant or facility. For example additionally or alternatively to those described previously they may include observations of power or water usage by equipment, or observations of power generation or distribution control, or observations of usage of a resource or of waste production. The agent may control actions in the environment to increase efficiency, for example by reducing resource usage, and/or reduce the environmental impact of operations in the environment, for example by reducing waste. For example the agent may control electrical or other power consumption, or water use, in the facility and/or a temperature of the facility and/or items within the facility. The actions may include actions controlling or imposing operating conditions on items of equipment of the plant/facility, and/or actions that result in changes to settings in the operation of the plant/facility e.g. to adjust or turn on/off components of the plant/facility.

In some further applications, the environment is a real-world environment and the agent manages distribution of tasks across computing resources e.g. on a mobile device and/or in a data center. In these implementations, the actions may include assigning tasks to particular computing resources.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1.   A computer-implemented reinforcement learning system comprising a computer-implemented neural network system (106) trained by supervised training to predict the actions of multiple agents in a shared environment (102) based on observations of the behaviour of the multiple agents in the shared environment, wherein the reinforcement learning system is configured to select actions to be performed by one of the agents interacting with the shared environment, wherein the environment is a real-world environment, and wherein the agents are mechanical agents, or comprise control devices to perform actions for controlling items of equipment in a manufacturing or service facility and working together to control the items of equipment, or the agents manage the distribution of tasks across computing resources by performing actions assigning tasks to particular computing resources, the neural network system comprising:

an input to receive agent data representing agent actions for each of multiple agents; and one or more processors configured to implement:

an encoder graph neural network subsystem (302) to process the agent data as graph data to provide encoded graph data,

wherein the graph data comprises (i) data representing at least nodes and edges of a graph and (ii) node attributes for at least some of the nodes in the graph,

wherein the nodes represent the agents and one or more non-agent entities in the environment,

wherein the edges connect nodes in the graph such that the edges connect the agents to each other and to the non-agent entities,

wherein the node attributes represent the actions of the agents, and

wherein the encoded graph data comprises node attributes and edge attributes representing an updated version of the graph data;

a recurrent graph neural network subsystem (304) comprising a recurrent neural network to process the encoded graph data and provide processed graph data comprising an updated version of the node attributes and edge attributes of the encoded graph data;

a decoder graph neural network subsystem (306) to decode the processed graph data and provide decoded graph data comprising an updated version of the node attributes for determining the actions of each agent and edge attributes of the processed graph data in which the edge attributes of each edge provide a representation of an effect a sender node of the graph has on a receiver node; and

a system output (308) to provide representation data comprising a representation of one or both of the node attributes and edge attributes of the decoded graph data for one or more of the agents, wherein the representation relates to a predicted action of one or more other agents of the multiple agents;

wherein the reinforcement learning system comprises an input to obtain and process state data representing observations of a state of the shared environment and reward data representing a reward received resulting from the agent performing the action, the reward data implicitly defining a task to be performed, a policy neural network (602), and a combiner (604) to combine the representation data and the state data to provide augmented observations (606), wherein the policy neural network (602) is configured to process the augmented observations to select the actions.

2.   A reinforcement learning system as claimed in claim 1 wherein the agent data representing agent actions comprises agent position and motion data for each of multiple agents, and wherein the node attributes for determining the actions of each agent further include attributes for the position and motion of each agent.

**3.** A reinforcement learning system as claimed in claim 1 or 2 wherein each of the agents is connected to each of the other agents by an edge and wherein each of the non-agent entities is connected to each of the agents by an edge.

**4.** A reinforcement learning system as claimed in claim 1, 2 or 3 wherein the system output comprises one or more output neural network layers to combine the node attributes for a node in the decoded graph data to output the representation data, and wherein the representation comprises a predicted action of the agent represented by the node.

**5.** A reinforcement learning system as claimed in claim 4 wherein the representation data further defines a spatial map of data derived from the node attributes of one or more nodes representing one or more of the agents (500a,b) and wherein, in the spatial map, the data derived from the node attributes is represented at a position of the agent represented by the respective node.

**6.** A reinforcement learning system as claimed in any one of claims 1-5 wherein the representation data comprises a representation of the edge attributes of the decoded graph data for the edges connecting to one or more of the nodes, and wherein the representation of the edge attributes for an edge is determined from a combination of the edge attributes for the edge.

**7.** A reinforcement learning system as claimed in claim 6 wherein the representation data further defines a spatial map and wherein, in the spatial map, the representation of the edge attributes for an edge comprises a vector norm of the edge attributes and is represented at an origin node position for the edge, where the origin node position is the position of the agent represented by the origin node.

**8.** A reinforcement learning system as claimed in any one of claims 1-7 wherein one or more of the encoder, recurrent, and decoder graph neural network subsystems is configured to:

for each of the edges, process the edge attributes using an edge neural network to determine output edge attributes,
for each of the nodes, aggregate the output edge attributes for edges connecting to the node to determine aggregated edge attributes for the node, and
for each of the nodes, process the aggregated edge attributes and the node attributes using a node neural network to determine output node attributes.

**9.** A reinforcement learning system as claimed in claim 8 wherein processing the edge attributes comprises, for each edge, providing the edge attributes and node attributes for the nodes connected by the edge to the edge neural network to determine the output edge attributes.

**10.** A reinforcement learning system as claimed in claim 8 or 9 wherein one or more of the encoder, recurrent, and decoder graph neural network subsystems is further configured to determine a global feature vector using a global feature neural network, the global feature vector representing the output edge attributes and the output node attributes, and wherein a subsequent graph neural network subsystem is configured to process the global feature vector when determining the output edge attributes and output node attributes.

**11.** A reinforcement learning system as claimed in any preceding claim further comprising an observation processing neural network subsystem coupled to the reinforcement learning system input, wherein the observation processing neural network subsystem is configured to determine the node attributes for the graph processed by the encoder graph neural network subsystem.

**12.** A reinforcement learning system as claimed in any preceding claim configured to train the neural network system for predicting the actions the agents from observations of the shared environment during training of the reinforcement learning system.

**13.** A method of training a reinforcement learning system as recited in any preceding claim, the method comprising jointly training i) the policy neural network and ii) the neural network system.

**14.** One or more computer storage media storing instructions that when executed by one or more computers cause the one or more computers to implement the system of any one of claims 1-12 or the method of claim 13.

**Patentansprüche**

**1.** Computerimplementiertes System zum Verstärkungslernen, umfassend ein computerimplementiertes neuronales Netzsystem (106), das durch überwachtes Trainieren trainiert wird, um die Aktionen von mehreren Agenten in einer gemeinsamen Umgebung (102) basierend auf Beobachtungen des Verhaltens der mehreren Agenten in der gemeinsamen Umgebung vorherzusagen, wobei das System zum Verstärkungslernen dazu konfiguriert ist, Aktionen auszuwählen, die von einem der mit der gemeinsamen Umgebung interagierenden Agenten durchzuführen sind, wobei es sich bei der Umgebung um eine reale Umgebung handelt und wobei die Agenten mechanische Agenten sind oder Steuervorrichtungen umfassen, um Aktionen zum Steuern von Ausrüstungsgegenständen in einer Fertigungs- oder Dienstleistungseinrichtung durchzuführen und zusammenzuarbeiten, um die Ausrüstungsgegenstände zu steuern, oder die Agenten die Verteilung von Aufgaben über Rechenressourcen verwalten, indem sie Aktionen durchführen, die bestimmten Rechenressourcen Aufgaben zuweisen, wobei das neuronale Netzsystem Folgendes umfasst:

eine Eingabe, um Agentendaten zu empfangen, die Agentenaktionen für jeden von mehreren Agenten darstellen; und einen oder mehrere Prozessoren, die dazu konfiguriert sind, Folgendes zu implementieren:

ein neuronales Codierergraphnetz-Teilsystem (302) zum Verarbeiten der Agentendaten als Graphdaten, um codierte Graphdaten bereitzustellen,
wobei die Graphdaten (i) Daten, die mindestens Knoten und Kanten eines Graphen darstellen, und (ii) Knotenattribute für mindestens einige der Knoten in dem Graphen umfassen,
wobei die Knoten die Agenten und eine oder mehrere Nichtagenten-Entitäten in der Umgebung darstellen,
wobei die Kanten Knoten in dem Graph so verbinden, dass die Kanten die Agenten miteinander und mit den Nichtagenten-Entitäten verbinden,
wobei die Knotenattribute die Aktionen der Agenten darstellen, und
wobei die codierten Graphdaten Knotenattribute und Kantenattribute umfassen, die eine aktualisierte Version der Graphdaten darstellen;
ein rekurrentes neuronales Codierergraphnetz-Teilsystem (304), das ein rekurrentes neuronales Netz umfasst, um die codierten Graphdaten zu verarbeiten und verarbeitete Graphdaten bereitzustellen, die eine aktualisierte Version der Knotenattribute und Kantenattribute der codierten Graphdaten umfassen;
ein neuronales Decodierergraphnetz-Teilsystem (306) zum Decodieren der verarbeiteten Graphdaten und zum Bereitstellen decodierter Graphdaten, die eine aktualisierte Version der Knotenattribute zum Bestimmen der Aktionen jedes Agenten und der Kantenattribute der verarbeiteten Graphdaten umfassen, wobei die Kantenattribute jeder Kante eine Darstellung einer Wirkung bereitstellen, die ein Absenderknoten des Graphen auf einen Empfängerknoten aufweist; und

eine Systemausgabe (308) zum Bereitstellen von Darstellungsdaten, die eine Darstellung eines oder beider der Knotenattribute und Kantenattribute der decodierten Graphdaten für einen oder mehrere der Agenten umfassen, wobei sich die Darstellung auf eine vorhergesagte Aktion eines oder mehrerer anderer Agenten der mehreren Agenten bezieht;
wobei das Verstärkungslernsystem eine Eingabe zum Erlangen und Verarbeiten von Zustandsdaten, die Beobachtungen eines Zustands der gemeinsamen Umgebung darstellen, und von Belohnungsdaten, die eine empfangene Belohnung darstellen, die aus dem Agenten resultiert, der die Aktion durchführt, wobei die Belohnungsdaten implizit eine durchzuführende Aufgabe, ein neuronales Richtliniennetz (602) und einen Kombinator (604) definieren, um die Darstellungsdaten und die Zustandsdaten zu kombinieren, um erweiterte Beobachtungen (606) bereitzustellen, wobei das neuronale Richtliniennetz (602) dazu konfiguriert ist, die erweiterten Beobachtungen zu verarbeiten, um die Aktionen auszuwählen.

2. Verstärkungslernsystem nach Anspruch 1, wobei die Agentendaten, die Aktionen der Agenten repräsentieren, Agentenpositions- und Bewegungsdaten für jeden von mehreren Agenten umfassen, und wobei die Knotenattribute zum Bestimmen der Aktionen jedes Agenten ferner Attribute für die Position und Bewegung jedes Agenten beinhalten.

3. System zum Verstärkungslernen nach Anspruch 1 oder 2, wobei jeder der Agenten mit jedem der anderen Agenten durch eine Kante verbunden ist und wobei jede der Nichtagent-Entitäten mit jedem der Agenten durch eine Kante verbunden ist.

4. Verstärkungslernsystem nach Anspruch 1, 2 oder 3, wobei die Systemausgabe eine oder mehrere neuronale Netzschichten zum Kombinieren der Knotenattribute für einen Knoten in den decodierten Graphdaten umfasst, zum Ausgeben der Darstellungsdaten, und wobei die Darstellung eine vorhergesagte Aktion des durch den Knoten dargestellten Agenten umfasst.

5. Verstärkungslernsystem nach Anspruch 4, wobei die Darstellungsdaten ferner eine räumliche Abbildung von Daten definieren, die von den Knotenattributen eines oder mehrerer Knoten abgeleitet sind, die einen oder mehrere der Agenten (500a, b) darstellen, und wobei in der räumlichen Abbildung die von den Knotenattributen abgeleiteten Daten an einer Position des durch den jeweiligen Knoten dargestellten Agenten dargestellt sind.

**6.** System zum Verstärkungslernen nach einem der Ansprüche 1-5, wobei die Darstellungsdaten eine Darstellung der Kantenattribute der decodierten Graphdaten für die Kanten umfassen, die mit einem oder mehreren der Knoten verbunden sind, und wobei die Darstellung der Kantenattribute für eine Kante aus einer Kombination der Kantenattribute für die Kante bestimmt wird.

**7.** Verstärkungslernsystem nach Anspruch 6, wobei die Darstellungsdaten ferner eine räumliche Abbildung definieren und wobei in der räumlichen Abbildung die Darstellung der Kantenattribute für eine Kante eine Vektornorm der Kantenattribute umfasst und an einer Ursprungsknotenposition für die Kante dargestellt ist, wobei die Ursprungsknotenposition die Position des durch den Ursprungsknoten dargestellten Agenten ist.

**8.** System zum Verstärkungslernen nach einem der Ansprüche 1-7, wobei eines oder mehrere der neuronalen rekurrenten Codierer- und Decodierernetz-Teilsysteme des neuronalen Netzes konfiguriert sind zum:

für jede der Kanten, Verarbeiten der Kantenattribute unter Verwendung eines neuronalen Netzes, um die Ausgangskantenattribute zu bestimmen,
für jeden der Knoten, Aggregieren der Ausgangskantenattribute für Kanten, die mit dem Knoten verbunden sind, um aggregierte Kantenattribute für den Knoten zu bestimmen, und
für jeden der Knoten, Verarbeiten der aggregierten Kantenattribute und der Knotenattribute unter Verwendung eines neuronalen Netzes, um die Ausgangsknotenattribute zu bestimmen.

**9.** Verstärkungslernsystem nach Anspruch 8, wobei das Verarbeiten der Kantenattribute für jede Kante das Bereitstellen der Kantenattribute und Knotenattribute für die durch die Kante verbundenen Knoten an das neuronale Netz umfasst, um die Ausgangskantenattribute zu bestimmen.

**10.** Verstärkungslernsystem nach Anspruch 8 oder 9, wobei eines oder mehrere der neuronalen rekurrenten Codierer- und Decodierernetz-Teilsysteme dazu konfiguriert sind, einen globalen Merkmalsvektor unter Verwendung eines neuronalen Globalmerkmalsnetzes zu bestimmen, wobei der globale Merkmalsvektor die Ausgangskantenattribute und die Ausgangsknotenattribute darstellt und wobei ein nachfolgendes neuronales Graphennetz-Teilsystem dazu konfiguriert ist, den globalen Merkmalsvektor zu verarbeiten, wenn die Ausgangskantenattribute und die Ausgangsknotenattribute bestimmt werden.

**11.** Verstärkungslernsystem nach einem der vorhergehenden Ansprüche, ferner umfassend ein mit der Eingabe des Verstärkungslernsystems gekoppeltes neuronales Codierernetz-Teilsystem zum Verarbeiten von Beobachtungen, wobei das neuronale Codierernetz-Teilsystem dazu konfiguriert ist, die Knotenattribute für den von dem neuronalen Codierernetz-Teilsystem verarbeiteten Graphen zu bestimmen.

**12.** Verstärkungslernsystem nach einem der vorhergehenden Ansprüche, dazu konfiguriert, das neuronale Netzsystem zu trainieren, um die Aktionen der Agenten aus Beobachtungen der gemeinsamen Umgebung während des Trainierens des Verstärkungslernsystems vorherzusagen.

**13.** Verfahren zum Trainieren eines Verstärkungslernsystems nach einem der vorhergehenden Ansprüche, wobei das Verfahren das gemeinsame Trainieren i) des Richtliniennetzes und ii) des neuronalen Netzsystems umfasst.

**14.** Ein oder mehrere Computerspeichermedien, die Anweisungen speichern, die bei Ausführung durch einen oder mehrere Computer den einen oder die mehreren Computer veranlassen, das System nach einem der Ansprüche 1-12 oder das Verfahren nach Anspruch 13 zu implementieren.

**Revendications**

**1.** Système d'apprentissage de renforcement mis en œuvre par ordinateur comprenant un système de réseau neuronal mis en œuvre par ordinateur (106) entraîné par entraînement supervisé pour prédire les actions de multiples agents dans un environnement partagé (102) sur la base d'observations du comportement des multiples agents dans l'environnement partagé, dans lequel le système d'apprentissage de renforcement est configuré pour sélectionner des actions à exécuter par l'un des agents interagissant avec l'environnement partagé, dans lequel l'environnement est un environnement du monde réel, et dans lequel les agents sont des agents mécaniques, ou comprennent des dispositifs de commande pour exécuter des actions de commande d'éléments d'équipement dans une installation de fabrication ou de service et fonctionnant ensemble pour commander les éléments d'équipement, ou les agents gèrent la distribution de tâches sur des ressources informatiques en exécutant des actions attribuant des tâches à des ressources informatiques particulières, le système de réseau neuronal comprenant :
une entrée pour recevoir des données d'agent représentant des actions d'agent pour chacun de multiples agents ; et un ou plusieurs processeurs configurés pour mettre en oeuvre :

un sous-système de réseau neuronal de graphe encodeur (302) pour traiter les données d'agent en tant que données de graphe pour fournir des données de graphe codées,

dans lequel les données de graphe comprennent (i) des données représentant au moins des noeuds et des bords d'un graphe et (ii) des attributs de noeud pour au moins certains des noeuds dans le graphe,

dans lequel les noeuds représentent les agents et une ou plusieurs entités non-agents dans l'environnement,

dans lequel les bords connectent des noeuds dans le graphe de sorte que les bords connectent les agents entre eux et aux entités non-agents,

dans lequel les attributs de noeud représentent les actions des agents, et

dans lequel les données de graphe codées comprennent des attributs de noeud et des attributs de bord représentant une version mise à jour des données de graphe ;

un sous-système de réseau neuronal de graphe récurrent (304) comprenant un réseau neuronal récurrent pour traiter les données de graphe codées et fournir des données de graphe traitées comprenant une version mise à jour des attributs de noeud et des attributs de bord des données de graphe codées ;

un sous-système de réseau neuronal de graphe décodeur (306) pour décoder les données de graphe traitées et fournir des données de graphe décodées comprenant une version mise à jour des attributs de noeud pour déterminer les actions de chaque agent et des attributs de bord des données de graphe traitées dans lesquelles les attributs de bord de chaque bord fournissent une représentation d'un effet qu'un noeud émetteur du graphe a sur un noeud récepteur ; et

une sortie de système (308) pour fournir des données de représentation comprenant une représentation d'un ou des deux des attributs de noeud et attributs de bord des données de graphe décodées pour un ou plusieurs des agents, dans lequel la représentation se rapporte à une action prédite d'un ou de plusieurs autres agents des multiples agents ;

dans lequel le système d'apprentissage de renforcement comprend une entrée pour obtenir et traiter des données d'état représentant des observations d'un état de l'environnement partagé et des données de récompense représentant une récompense reçue résultant de l'exécution de l'action par l'agent, les données de récompense définissant implicitement une tâche à exécuter, un réseau neuronal de politique (602) et un combinateur (604) pour combiner les données de représentation et les données d'état pour fournir des observations augmentées (606), dans lequel le réseau neuronal de politique (602) est configuré pour traiter les observations augmentées pour sélectionner les actions.

2. Système d'apprentissage de renforcement selon la revendication 1, dans lequel les données d'agent représentant les actions d'agent comprennent des données de position et de mouvement d'agent pour chacun des multiples agents, et dans lequel les attributs de noeud pour déterminer les actions de chaque agent comportent également des attributs pour la position et le mouvement de chaque agent.

3. Système d'apprentissage de renforcement selon la revendication 1 ou 2, dans lequel chacun des agents est connecté à chacun des autres agents par un bord et dans lequel chacune des entités non-agents est connectée à chacun des agents par un bord.

4. Système d'apprentissage de renforcement selon la revendication 1, 2 ou 3, dans lequel la sortie de système comprend une ou plusieurs couches de réseau neuronal de sortie pour combiner les attributs de noeud pour un noeud dans les données de graphe décodées pour délivrer en sortie les données de représentation, et dans lequel la représentation comprend une action prédite de l'agent représenté par le noeud.

5. Système d'apprentissage de renforcement selon la revendication 4, dans lequel les données de représentation définissent également une carte spatiale de données dérivées des attributs de noeud d'un ou de plusieurs noeuds représentant un ou plusieurs des agents (500a,b) et dans lequel, dans la carte spatiale, les données dérivées des attributs de noeud sont représentées au niveau d'une position de l'agent représenté par le noeud respectif.

6. Système d'apprentissage de renforcement selon l'une quelconque des revendications 1 à 5, dans lequel les données de représentation comprennent une représentation des attributs de bord des données de graphe décodées pour les bords se connectant à un ou plusieurs des noeuds, et dans lequel la représentation des attributs de bord pour un bord est déterminée à partir d'une combinaison des attributs de bord pour le bord.

7. Système d'apprentissage de renforcement selon la revendication 6, dans lequel les données de représentation définissent également une carte spatiale et dans lequel, dans la carte spatiale, la représentation des attributs de bord pour un bord comprend une norme vectorielle des attributs de bord et est représentée au niveau d'une position de noeud d'origine pour le bord, où la position de noeud d'origine est la position de l'agent représenté par le noeud d'origine.

8. Système d'apprentissage de renforcement selon l'une quelconque des revendications 1 à 7, dans lequel un ou plusieurs des sous-systèmes de réseau neuronal encodeur, récurrent et décodeur sont configurés pour :

pour chacun des bords, traiter les attributs de bord à l'aide d'un réseau neuronal de bord pour déterminer les attributs de bord de sortie,
pour chacun des noeuds, agréger les attributs de bord de sortie pour les bords se connectant au noeud pour déterminer les attributs de bord agrégés pour le noeud, et
pour chacun des noeuds, traiter les attributs de bord agrégés et les attributs de noeud à l'aide d'un réseau neuronal de noeud pour déterminer des attributs de noeud de sortie.

9. Système d'apprentissage de renforcement selon la revendication 8, dans lequel le traitement des attributs de bord comprend, pour chaque bord, la fourniture des attributs de bord et des attributs de noeud pour les noeuds connectés par le bord au réseau neuronal de bord pour déterminer les attributs de bord de sortie.

10. Système d'apprentissage de renforcement selon la revendication 8 ou 9, dans lequel un ou plusieurs des sous-systèmes de réseau neuronal de graphe encodeur, récurrent et décodeur sont également configurés pour déterminer un vecteur de caractéristiques globales à l'aide d'un réseau neuronal de caractéristiques globales, le vecteur de caractéristiques globales représentant les attributs de bord de sortie et les attributs de noeud de sortie, et dans lequel un sous-système de réseau neuronal de graphe ultérieur est configuré pour traiter le vecteur de caractéristiques globales lors de la détermination des attributs de bord de sortie et des attributs de noeud de sortie.

11. Système d'apprentissage de renforcement selon une quelconque revendication précédente, comprenant également un sous-système de réseau neuronal de traitement d'observation couplé à l'entrée de système d'apprentissage de renforcement, dans lequel le sous-système de réseau neuronal de traitement d'observation est configuré pour déterminer les attributs de noeud pour le graphe traité par le sous-système de réseau neuronal de graphe encodeur.

12. Système d'apprentissage de renforcement selon une quelconque revendication précédente, configuré pour entraîner le système de réseau neuronal pour prédire les actions des agents à partir d'observations de l'environnement partagé pendant l'entraînement du système d'apprentissage de renforcement.

13. Procédé d'entraînement d'un système d'apprentissage de renforcement tel que décrit selon une quelconque revendication précédente, le procédé comprenant l'entraînement conjoint i) du réseau neuronal de politique et ii) du système de réseau neuronal.

14. Un ou plusieurs supports de stockage informatique stockant des instructions qui, lorsqu'elles sont exécutées par un ou plusieurs ordinateurs, amènent les un ou plusieurs ordinateurs à mettre en œuvre le système selon l'une quelconque des revendications 1 à 12 ou le procédé selon la revendication 13.

Training engine 120

Physical system environment 102

Semantic description of environment state 104

Graph Processing Neural Network System 106

Graph Neural Network 110

Representation data: Prediction/Explanation

108

100

Figure 1

Figure 2a

200

FOR EACH EDGE: TAKE EDGE FEATURE VECTOR; GATHER SENDER AND RECEIVER NODES; TAKE GLOBAL FEATURE VECTOR COMPUTE OUTPUT EDGE VECTOR USING EDGE NEURAL NETWORK

202

FOR EACH NODE: AGGREGATE EDGE VECTORS FOR EDGES RECIVED BY THE NODE; TAKE NODE FEATURE VECTOR; TAKE GLOBAL FEATURE VECTOR; COMPUTE OUTPUT NODE VECTOR USING NODE NEURAL NETWORK

204

FOR EACH GRAPH: AGGREGATE ALL EDGE VECTORS; AGGREGATE ALL NODE FEATURE VECTORS; TAKE GLOBAL FEATURE VECTOR

206

COMPUTE GLOBAL FEATURE VECTOR USING GLOBAL FEATURE NEURAL NETWORK

# Figure 2b

EP 3 776 370 B1

$G_{hid}^{t-1}$ → **Graph GRU** — 304 → $G_{hid}^{t}$

302 — **GN encoder**

**GN decoder** — 306

308 — MLP

$G_{in}^{t}$

$G_{out}^{t}$

Representation data

106

Figure 3

FOR EACH TIME
STEP *t*:

400

INPUT DATA DESCRIBING A STATE OF THE
ENVIRONMENT AND BUILD INPUT GRAPH

402

ENCODE INPUT GRAPH USING GN ENCODER
TO OBTAIN ENCODED GRAPH DATA

404

PROCESS ENCODED GRAPH DATA USING
GRAPH GRU TO OBTAIN LATENT GRAPH

406

DECODE LATENT GRAPH USING GN DECODER
TO OBTAIN OUTPUT GRAPH

408

DETERMINE REPRESENTATION DATA FOR
PREDICTING/EXPLAINING AGENT BEHAVIOR
FROM OUTPUT GRAPH

# Figure 4

Figure 5a   Figure 5b

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG et al.** Nervenet: Learning Structured Policy with Graph Neural Networks. *ICLR,* 2018
- **KIPF et al.** Neural Relational Inference for Interacting Systems. *arXiv:1802.04687v1*
- **HOANG et al.** Coordinated Multi-Agent Imitation Learning. *arXiv:1703.03121v1*
- **LOWE.** Multi-Agent Actor-Critic for Mixed Cooperative-Competitive Environments. *arXiv:1706.02275v3*
- **BATTAGLIA et al.** Interaction Networks for Learning about Objects, Relations and Physics. *arXiv: 1612.00222v1*